# EUROPEAN PATENT APPLICATION

(11) **EP 4 825 716 A1**
(43) Date of publication of application: **21.10.2026**
(21) Application number: 25186946.7
(22) Date of filing: 02.07.2025
(51) Int. Cl.: B62K 15/00, B62K 19/36, B62J 1/08, B62K 3/04, B62J 50/22

(54) **BICYCLE FRAME HAVING ADJUSTABLE SADDLE POSITION**

(30) Priority: 15.04.2025 KR 20250048620
(71) Applicant: Moqous Inc., Namdong-gu Incheon (KR)
(72) Inventor: HONG, Bok Yong, Bucheon-si (KR)
(74) Representative: Lincoln IP

(57) **Abstract**

The present disclosure relates to a bicycle frame having an adjustable saddle position, and more specifically, to a bicycle frame having an adjustable saddle position, including a combination of a top frame 10 having a predetermined length, a seat frame 20 movable in a longitudinal direction of the top frame 10, a position adjustment unit 30 configured to adjust a fixed position of the seat frame 20, a down frame 40 linked with movement of the seat frame 20, a speed increasing device 50 configured to increase the number of rotations of a rear wheel when a pedal is rotated, and a fork frame 60 having a steering handlebar 2 connected to an upper portion of the fork frame 60 in a height-adjustable manner, and a front wheel provided on a lower portion of the fork frame 60.

## Description

### CROSS-REFERENCE TO RELATED APPLICATION

This application claims the benefit of Korean Patent Application No. 10-2025-0048620, filed on April 15, 2025, in the Korean Intellectual Property Office, the entire disclosure of which is incorporated herein by reference for all purposes.

### BACKGROUND

### 1. Field of the Invention

The present disclosure relates to a bicycle frame having an adjustable saddle position, and, more specifically, to a bicycle frame having an adjustable saddle position that enables the saddle position to be automatically adjusted arbitrarily. The present disclosure also relates to a bicycle in which bicycle tires are coupled to the bicycle frame having an adjustable saddle position.

### 2. Description of the Related Art

Generally, a bicycle frame has an approximately diamond-shaped structure and includes a head tube having an upper portion to which a handlebar is connected and a lower portion to which a fork that fixes a front wheel is connected, a seat tube having an upper portion to which a seat (saddle) is connected and a lower portion to which a pedal crank shaft is connected, a top tube connecting the upper portion of the head tube and the upper portion of the seat tube, a down tube connecting the lower portion of the head tube and the lower portion of the seat tube, a seat stay tube connecting the upper portion of the seat tube and a rear wheel axle, and a chain stay tube connecting the pedal crank shaft and the rear wheel axle.

However, in a conventional bicycle frame, each of these tubular members is fixed to each other by welding, and if welding is defective, the connection portions may be easily damaged. Furthermore, the durability is weak, posing a risk of safety accidents.

In addition, although various types of foldable or collapsible bicycles have been released to allow the length or volume of the frame to be reduced for convenient storage or transportation, there is still a lack of bicycles that allow the distance between the front wheel and the pedal crank shaft to be adjusted in consideration of the rider's age or height.

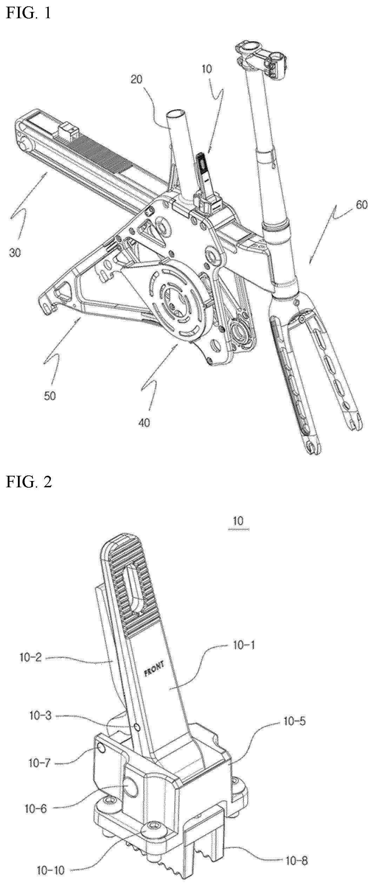

To address such problems, Korean Patent Laid-Open Publication No. 10-2017-0035037 (title of invention: STRUCTURE OF BIKE FRAME) has been disclosed, and this is illustrated in FIGS. 1 and 2.

The bicycle frame structure includes a combination of a top frame 30 having a predetermined length and having wave-shaped portions respectively formed at front and rear portions of an upper surface of the top frame 30, a seat frame 20 disposed on an upper portion of the top frame 30 and configured to be movable in a sliding manner in a longitudinal direction of the top frame 30, a clamping device 10 connected to the seat frame 20 and having a cam lever 10-1 provided with a safety lever 10-2, wherein a jaw 10-8 that can be fixed to the wave-shaped portions is configured to vertically reciprocate at a lower portion of the cam lever 10-1, a down frame 50 including a one-side down frame and an other-side down frame respectively extending downward from both lateral sides of the seat frame 20, with a rear wheel and a pedal shaft provided on one side of the down frame 50, wherein the down frame 50 is linked with slide movement of the seat frame 20, a speed increasing device 40 disposed between the one-side down frame and the other-side down frame and configured to increase the number of rotations of the rear wheel when the pedal is rotated, and a fork frame 60 connected to a front portion of the top frame 30 without welding, having an upper portion to which a steering handlebar is connected in a height-adjustable manner, and a lower portion on which a front wheel is mounted.

In the bicycle frame structure configured as described above, when the jaw 10-8 is moved downward by the operation of the safety lever 10-2 and the cam lever 10-1, the jaw is fixed to one of the wave-shaped portions, and when the jaw 10-8 is moved upward, the seat frame 20 becomes slidable, so that the down frame 50 may reciprocate in a sliding manner along the top frame 30, thereby enabling contraction and extension.

In the bicycle frame structure, the down frame (down tube) may be moved to an arbitrary position on the top tube (top frame) and fixed, thereby eliminating the need for welding for fixing each tube (frame), which improves durability and safety, and also enables the formation of an optimal bicycle frame suitable for the rider's body type regardless of age, gender, height, or physical condition, resulting in improved riding stability and reduced fatigue.

However, in the bicycle frame structure configured as described above, the seat frame 20 becomes movable in a sliding manner when the jaw 10-8 is moved upward by the operation of the safety lever 10-2 and the cam lever 10-1, so that the down frame 50 may move in a sliding manner along the top frame 30, thereby enabling contraction and extension. In this state, when the jaw 10-8 is moved downward by the operation of the safety lever 10-2 and the cam lever 10-1, the jaw 10-8 is fixed to one of the wave-shaped portions. However, since the operation of the safety lever 10-2 and the cam lever 10-1 for moving the jaw 10-8 upward and downward must be performed manually, it is very inconvenient.

Additionally, the operation of the safety lever 10-2 and the cam lever 10-1 for moving the jaw 10-8 upward and downward must be performed while the bicycle is stopped, which is another inconvenience.

Furthermore, when riding a bicycle for a long time, a change in riding posture becomes necessary, but in order to change the riding posture in accordance with a change in saddle position and to form an optimal bicycle frame suitable for the rider's body type, the saddle position must be changed while the bicycle is stopped, which is also inconvenient.

### SUMMARY

The present disclosure is intended to solve the problems inherent in the conventional bicycle frame described above, and provides a bicycle frame having an adjustable saddle position that not only enables the saddle position to be automatically adjusted with ease, but also allows the saddle position to be adjusted while the bicycle is in motion.

According to an aspect, there is provided a bicycle frame having an adjustable saddle position, including a top frame 10 having a predetermined length, a seat frame 20 coupled to the top frame 10 and movable in a longitudinal direction of the top frame 10, a position adjustment unit 30 provided on the seat frame 20 and configured to enable movement of the seat frame 20 along the top frame 10 in the longitudinal direction of the top frame 10 to adjust a fixed position of the seat frame 20, a down frame 40 including a one-side down frame 40-1 and an other-side down frame 40-2 respectively extending downward from both lateral sides of the seat frame 20, with a rear wheel and a pedal shaft provided on one side of the down frame 40, wherein the down frame 40 is linked with the movement of the seat frame 20, a speed increasing device 50 disposed between the one-side down frame 40-1 and the other-side down frame 40-2 and configured to increase the number of rotations of the rear wheel when the pedal is rotated, and a fork frame 60 connected to a front portion of the top frame 30 without welding, having an upper portion to which a steering handlebar 2 is connected in a height-adjustable manner, and a lower portion on which a front wheel is mounted, wherein the seat frame 20 is movable along the top frame 10 in the longitudinal direction of the top frame 10 by the position adjustment unit 30 to allow the saddle 1 provided on the seat frame 20 to reciprocate along the top frame 10, thereby enabling adjustment of the saddle position.

Additionally, the top frame 10 may include a lead screw 11 formed to extend in the longitudinal direction of the top frame 10, wherein the position adjustment unit 30 may include a lead screw coupling part 31 having an inner circumference engaged with the lead screw 11 and an outer circumference on which a first helical gear 31a is formed, an external gear 32 having a second helical gear 32a that is externally engaged with the first helical gear 31a of the lead screw coupling part 31, and a rotary motor 33 fixed to the seat frame 20 and having a motor shaft 33a coupled to the external gear 32, wherein the rotary motor 33 rotates the external gear 32 to rotate the lead screw coupling part 31, thereby allowing the lead screw coupling part 31 to move in a longitudinal direction of the lead screw 11 of the top frame 10, and thus allowing the seat frame 20 to move in the longitudinal direction of the top frame 10.

Furthermore, the steering handlebar 2 may further include a control panel 70 configured to control rotational operation of the rotary motor 33.

According to an embodiment of the present disclosure, an optimal saddle position suitable for the rider's body type may be automatically changed regardless of age, gender, height, or physical condition, thereby providing an effect of enjoying riding with improved riding stability and reduced fatigue.

Additionally, the present disclosure provides the advantage of excellent operability, as the saddle position may be changed with a simple operation even while the bicycle is in motion.

### BRIEF DESCRIPTION OF THE DRAWINGS

FIGS. 1 and 2 are diagrams showing a conventional bicycle frame.
FIG. 3 is an exploded perspective view of a bicycle frame having an adjustable saddle position according to an embodiment of the present disclosure.
FIG. 4 is a side view of a bicycle frame having an adjustable saddle position according to an embodiment of the present disclosure.
FIG. 5 is a diagram showing an internal structure of a saddle position adjustment unit of a bicycle frame having an adjustable saddle position according to an embodiment of the present disclosure.
FIG. 6 is a perspective view showing a structure of a saddle position adjustment unit of a bicycle frame having an adjustable saddle position according to an embodiment of the present disclosure.
FIG. 7 is a diagram showing a configuration of a server of a bicycle frame having an adjustable saddle position according to an embodiment of the present disclosure.

### DETAILED DESCRIPTION

Hereinafter, embodiments of the present disclosure will be described in detail with reference to the accompanying drawings, so that the product has novelty and inventive step. However, the attached embodiments are merely exemplary for understanding the present disclosure and are not intended to limit the present disclosure. Descriptions of technologies that are obvious or easily derivable to those skilled in the art will be omitted.

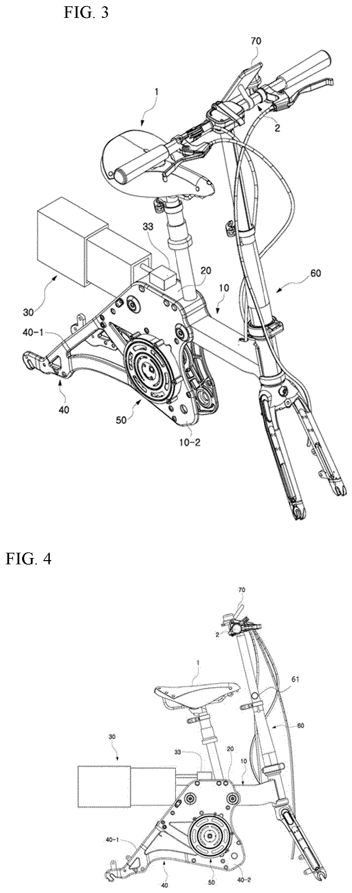

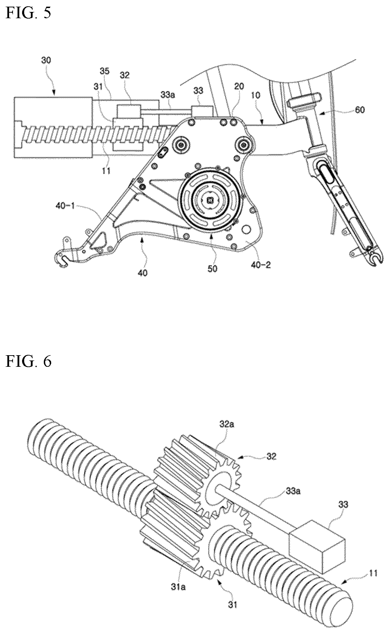

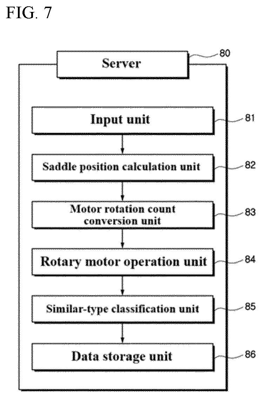

FIG. 3 is an exploded perspective view of a bicycle frame having an adjustable saddle position according to an embodiment of the present disclosure; FIG. 4 is a side view of a bicycle frame having an adjustable saddle position according to an embodiment of the present disclosure; FIG. 5 is a diagram showing an internal structure of a saddle position adjustment unit of a bicycle frame having an adjustable saddle position according to an embodiment of the present disclosure; FIG. 6 is a perspective view showing a structure of a saddle position adjustment unit of a bicycle frame having an adjustable saddle position according to an embodiment of the present disclosure; and FIG. 7 is a diagram showing a configuration of a server of a bicycle frame having an adjustable saddle position according to an embodiment of the present disclosure.

As shown in the drawings, the bicycle frame having an adjustable saddle position of the present disclosure may include a combination of a top frame 10, a seat frame 20, a position adjustment unit 30, a down frame 40, a speed increasing device 50, and a fork frame 60.

The top frame 10 may have a predetermined length and may be typically installed to extend horizontally in a longitudinal direction of a bicycle at an upper portion of the bicycle.

The seat frame 20 may have an upper portion to which a saddle 1 is provided, and may be coupled to the top frame 10 so as to be movable in a longitudinal direction of the top frame 10. A heating wire may be provided on the surface of the saddle 1 to provide warmth during winter.

Typically, the seat frame may be configured to reciprocate a circular post tube to which a bicycle saddle is attached, so that the height of the saddle can be adjusted according to the rider's body size, and may generally be fixed using a quick-release clamp.

The position adjustment unit 30 may be provided on the seat frame 20 and configured to enable movement of the seat frame 20 along the top frame 10 in the longitudinal direction of the top frame 10 to adjust a fixed position of the seat frame 20.

The down frame 40 may include a one-side down frame 40-1 and an other-side down frame 40-2 respectively extending downward from both lateral sides of the seat frame 20, with a rear wheel and a pedal shaft provided on one side of the down frame 40, wherein the down frame 40 is linked with the movement of the seat frame 20.

The speed increasing device 50 may be disposed between the one-side down frame 40-1 and the other-side down frame 40-2 and configured to increase the number of rotations of the rear wheel when the pedal is rotated. The configuration for increasing the number of rotations of the rear wheel when the pedal is rotated is the same as that disclosed in Korean Patent Laid-Open Publication No. 10-2017-0035037, and a detailed description thereof will be omitted.

The fork frame 60 may be connected to a front portion of the top frame 10 without welding, and may have an upper portion to which a steering handlebar 2 is connected in a height-adjustable manner, and a lower portion on which a front wheel is mounted. The fork frame 60 may include an inclined rotation part 61 at an intermediate portion of the fork frame 60 so that the steering handlebar 2 is movable forward or rearward. During riding, a rider may rotate the inclined rotation part 61 such that the steering handlebar 2 faces forward, thereby enabling the rider to bend forward while riding, or may rotate the inclined rotation part 61 such that the steering handlebar 2 faces rearward, thereby enabling the rider to ride while keeping the back straight. Additionally, the fork frame 60 may be designed such that the thickness of a cylindrical tube forming the fork frame 60 increases from the steering handlebar 2 toward the lower portion of the fork frame 60, thereby increasing the weight of the lower portion of the fork frame 60 relative to the upper portion and improving stability during bicycle operation.

The seat frame 20, the down frame 40, the speed increasing device 50, and the fork frame 60 of the present disclosure are similar or identical to those disclosed in Korean Patent Laid-Open Publication No. 10-2017-0035037, and thus a detailed description of the structure and operation thereof will be omitted.

In the bicycle frame having an adjustable saddle position of the present disclosure, with the above-described configuration, the seat frame 20 may be movable along the top frame 10 in the longitudinal direction of the top frame 10 by the position adjustment unit 30 to allow the saddle 1 provided on the seat frame 20 to reciprocate along the top frame 10, thereby enabling adjustment of the saddle position.

The present disclosure, with the above-described configuration, enables adjustment of an optimal saddle position suitable for the rider's body type regardless of age, gender, height, or physical condition, thereby providing an effect of enjoying riding with improved riding stability and reduced fatigue.

Conventionally, the position of the saddle has been adjusted by manually operating a lever, but in the present disclosure, the position adjustment unit 30 for adjusting the position of the saddle may be configured to be performed automatically.

To achieve this, the top frame 10 may be provided with a lead screw 11 formed to extend in the longitudinal direction of the top frame 10, and, as shown in FIGS. 5 and 6, the position adjustment unit 30 may include a lead screw coupling part 31, an external gear 32, and a rotary motor 33.

The top frame 10 may include a lead screw 11 formed to extend in a longitudinal direction of the top frame 10.

The lead screw coupling part 31 may be coupled to the lead screw 11, and when the lead screw coupling part 31 rotates, the lead screw coupling part 31 may move forward and backward in a longitudinal direction of the lead screw 11.

The lead screw coupling part 31 may have an inner circumference engaged with the lead screw 11 and an outer circumference on which a first helical gear 31a is formed.

The external gear 32 may be externally engaged with the first helical gear 31a of the lead screw coupling part 31, and a second helical gear 32a that meshes with the first helical gear 31a may be formed.

The rotary motor 33 may be fixed to the seat frame 20 and move forward and backward in conjunction with the seat frame 20.

The rotary motor 33 may include a motor shaft 33a coupled to the external gear 32. The rotary motor 33 may rotate the motor shaft 33a in both forward and reverse directions.

The rotary motor 33 may rotate the external gear 32 to rotate the lead screw coupling part 31, thereby allowing the lead screw coupling part 31 to move in a longitudinal direction of the lead screw 11 of the top frame 10, and thus allowing the seat frame 20 to move in the longitudinal direction of the top frame 10.

That is, the rotary motor 33 may be fixed to the seat frame 20, and when the motor shaft 33a is rotated by the rotation of the rotary motor 33, the external gear 32 coupled to the motor shaft 33a rotates. As the lead screw coupling part 31 meshed with the external gear 32 rotates, the lead screw coupling part 31 moves forward and backward along the lead screw 11. Here, the rotary motor 33, the motor shaft 33a, the external gear 32, and the lead screw coupling part 31 may be integrally fixed. When the lead screw coupling part 31 moves forward or backward, the rotary motor 33 also moves forward or backward. Accordingly, since the rotary motor 33 is fixed to the seat frame 20 and the lead screw 11 is provided along the top frame 10, when the lead screw coupling part 31 moves forward and backward along the lead screw 11 by the rotation of the rotary motor 33, the seat frame 20 may move forward and backward along the top frame 10. Here, since the saddle 1 is fixed to the seat frame 20, the seat frame 20 to which the saddle 1 is fixed may move forward and backward along the top frame 10 by the rotation of the rotary motor 33.

Additionally, the bicycle frame having an adjustable saddle position may include a battery that is charged by the rotation of the bicycle tires when the frame is assembled to a bicycle, and the rotary motor 33 may be driven by electricity stored in the battery.

As such, according to an embodiment of the present disclosure, an optimal saddle position suitable for the rider's body type may be automatically changed regardless of age, gender, height, or physical condition, thereby providing an effect of enjoying riding with improved riding stability and reduced fatigue.

In addition, the present disclosure may further include a housing cover 35 that accommodates the lead screw 11, the lead screw coupling part 31, and the external gear 32.

The housing cover 35 may be configured to be extendable and contractible to allow movement of the seat frame 20.

Furthermore, the steering handlebar 2 of the present disclosure may further include a control panel 70 configured to control rotational operation of the rotary motor 33.

Accordingly, the present disclosure enables the saddle position to be changed through a simple operation of the control panel 70, thereby providing very convenient operability. Since the operation is simple, it has an advantage that the saddle position can be adjusted while the bicycle is being ridden without stopping.

The present disclosure may further include a server 80 configured to set an optimal saddle position based on user body conditions and to control the number of rotations of the motor so that the seat frame 20 is moved forward and backward.

As shown in FIG. 7, the server 80 may include an input unit 81, a saddle position calculation unit 82, a motor rotation count conversion unit 83, and a rotary motor operation unit 84.

The input unit 81 may receive input of saddle position conditions based on the user's body conditions or user preferences.

The saddle position calculation unit 82 may calculate the saddle position based on the position conditions of the saddle input through the input unit 81.

The motor rotation count conversion unit 83 may convert the number of rotations of the rotary motor 33 based on the saddle position calculated by the saddle position calculation unit 82.

The rotary motor operation unit 84 may operate the rotary motor 33 in accordance with the number of rotations of the rotary motor 33 converted by the motor rotation count conversion unit 83.

Additionally, the server 80 may further include a similar-type classification unit 85. The similar-type classification unit 85 may classify the saddle position conditions, which are input based on the user's body condition or preference through the input unit 81, into respective types according to similar types.

Furthermore, the server 80 may further include a data storage unit 86.

The data storage unit 86 may store the data classified by the similar-type classification unit 85.

The present disclosure, with the above-described configuration, has an advantage in that, by classifying and storing the saddle position conditions according to the input user's body condition or preference into respective types according to similar types, the seat frame 20 can be moved forward and backward quickly according to the same type.

In addition, the present disclosure may further include a weight detection sensor configured to detect the weight of the rider on the saddle, and the seat frame 20 may be moved forward and backward in consideration of the body condition corresponding to the weight detected by the weight detection sensor. For example, when the user's body condition such as height and weight is input, if the weight is greater for the same height, the lead screw coupling part 31 may be set to be positioned farther away from the steering handlebar 2, so that more space is provided for a user with greater weight compared to a user with less weight.

When the weight detection sensor is provided, the saddle position calculation unit 82 of the server 80 may calculate the saddle position in accordance with the weight data detected by the weight detection sensor.

The present disclosure may include a saddle height interlocking unit that interlocks inversely with the saddle height data and moves the seat frame 20 forward and backward relative to the top frame 10. For example, in the saddle height interlocking unit, when the saddle height is increased, the moving distance of the seat frame 20 is set such that the seat frame 20 moves forward relative to the top frame 10, allowing the user to hold the steering handlebar 2 closer; whereas when the saddle height is lowered, the seat frame 20 is set to move rearward relative to the top frame 10, allowing the user to hold the steering handlebar 2 farther.

When the saddle height interlocking unit is provided, the saddle position calculation unit 82 of the server 80 may calculate the saddle position in accordance with the saddle height.

Additionally, the server 80 may be provided on the bicycle or separately from the bicycle.

When the server 80 is provided separately from the bicycle, the saddle position conditions according to the user's body condition or preference may be input to the input unit 81 through communication, and the operation signal from the rotary motor operation unit 84 may be transmitted through communication to control the operation of the rotary motor 33.

Although the foregoing description has been made in connection with the embodiments mentioned above, those skilled in the art will readily understand that various other modifications and changes may be made without departing from the idea and scope of the present disclosure, and such modifications and changes clearly fall within the scope of the appended claims.

## Claims

1. A bicycle frame having an adjustable saddle position, comprising:
a top frame having a predetermined length;
a seat frame coupled to the top frame and movable in a longitudinal direction of the top frame;
a position adjustment unit provided on the seat frame and configured to enable movement of the seat frame along the top frame in the longitudinal direction of the top frame to adjust a fixed position of the seat frame;
a down frame comprising a one-side down frame and an other-side down frame respectively extending downward from both lateral sides of the seat frame, with a rear wheel and a pedal shaft provided on one side of the down frame, wherein the down frame is linked with the movement of the seat frame;
a speed increasing device disposed between the one-side down frame and the other-side down frame and configured to increase the number of rotations of the rear wheel when the pedal is rotated; and
a fork frame connected to a front portion of the top frame without welding, having an upper portion to which a steering handlebar is connected in a height-adjustable manner, and a lower portion on which a front wheel is mounted;
wherein the seat frame is movable along the top frame in the longitudinal direction of the top frame by the position adjustment unit to allow the saddle provided on the seat frame to reciprocate along the top frame, thereby enabling adjustment of the saddle position.

2. The bicycle frame of claim 1, wherein the top frame comprises a lead screw formed to extend in a longitudinal direction of the top frame;
wherein the position adjustment unit comprises:
a lead screw coupling part having an inner circumference engaged with the lead screw and an outer circumference on which a first helical gear is formed;
an external gear having a second helical gear that is externally engaged with the first helical gear of the lead screw coupling part; and
a rotary motor fixed to the seat frame and having a motor shaft coupled to the external gear, wherein the rotary motor rotates the external gear to rotate the lead screw coupling part, thereby allowing the lead screw coupling part to move in a longitudinal direction of the lead screw of the top frame, and thus allowing the seat frame to move in the longitudinal direction of the top frame.

3. The bicycle frame of claim 2, wherein the steering handlebar further comprises a control panel configured to control rotational operation of the rotary motor.

## Amended claims

### Amended claims in accordance with Rule 137(2) EPC.

1. A bicycle frame having an adjustable saddle position, comprising:
a top frame (10) having a predetermined length;
a seat frame (20) coupled to the top frame (10) and movable in a longitudinal direction of the top frame (10);
a position adjustment unit (30) provided on the seat frame (20) and configured to enable movement of the seat frame (20) along the top frame (10) in the longitudinal direction of the top frame (10) to adjust a fixed position of the seat frame (20);
a down frame (40) comprising a one-side down frame and an other-side down frame respectively extending downward from both lateral sides of the seat frame (20), with a rear wheel and a pedal shaft provided on one side of the down frame (40), wherein the down frame (40) is linked with the movement of the seat frame (20);
a speed increasing device (50) disposed between the one-side down frame and the other-side down frame and configured to increase the number of rotations of the rear wheel when the pedal is rotated; and
a fork frame (60) connected to a front portion of the top frame (10) without welding, having an upper portion to which a steering handlebar (2) is connected in a height-adjustable manner, and a lower portion on which a front wheel is mounted;
wherein the seat frame (20) is movable along the top frame (10) in the longitudinal direction of the top frame (10) by the position adjustment unit (30) to allow the saddle provided on the seat frame (20) to reciprocate along the top frame (10), thereby enabling adjustment of the saddle position,
wherein the top frame (10) comprises a lead screw (11) formed to extend in the longitudinal direction of the top frame (10),
wherein the position adjustment unit (30) comprises:
a lead screw coupling part (31) having an inner circumference engaged with the lead screw (11); and
a rotary motor (33) fixed to the seat frame (20) and having a motor shaft (33a),
wherein the rotary motor (33) is configured to rotate the lead screw coupling part (31), thereby allowing the lead screw coupling part (31) to move in a longitudinal direction of the lead screw (11) of the top frame (10), and thus allowing the seat frame (20) to move in the longitudinal direction of the top frame (10) to adjust a position of a saddle provided on the seat frame (20),
**characterized in that** the bicycle frame further comprises a server (80) configured to set a saddle position based on user body conditions and to control the number of rotations of the rotary motor (33) so that the seat frame (20) is moved forward and backward,
wherein the server (80) comprises:
an input unit (81) configured to receive input of saddle position conditions based on the user's body conditions;
a saddle position calculation unit (82) configured to calculate the saddle position based on the input of saddle position conditions through the input unit (81);
a motor rotation count conversion unit (83) configured to convert the number of rotations of the rotary motor (33) based on the saddle position calculated by the saddle position calculation unit (82); and
a rotary motor operation unit (84) configured to operate the rotary motor (33) in accordance with the number of rotations of the rotary motor (33) converted by the motor rotation count conversion unit (83).

2. The bicycle frame of claim 1, wherein the steering handlebar (2) further comprises a control panel configured to control rotational operation of the rotary motor (33).
